# EUROPEAN PATENT APPLICATION

(11) **EP 4 403 444 A1**
(43) Date of publication of application: **24.07.2024**
(21) Application number: 23215790.9
(22) Date of filing: 12.12.2023
(51) Int. Cl.: B62J 6/026, B62J 45/41, B62J 27/00, B62J 6/027

(54) **STRADDLED VEHICLE**

(30) Priority: 19.01.2023 JP 2023006616
(71) Applicant: Yamaha Hatsudoki Kabushiki Kaisha, Iwata-shi, Shizuoka 438-8501 (JP)
(72) Inventor: Kimura, Yusuke, Iwata-shi, Shizuoka, 4388501 (JP); Nakagami, Masayuki, Iwata-shi, Shizuoka, 4388501 (JP); Yamada, Takahiro, Iwata-shi, Shizuoka, 4388501 (JP)
(74) Representative: Grünecker Patent- und Rechtsanwälte PartG mbB

(57) **Abstract**

A straddled vehicle (1) includes a vehicle body (2), a left light (21), a right light (22), a sensing device (28), a left mounting portion (65), and a right mounting portion (66). The left light (21) includes a left light lens (23). The right light (22) includes a right light lens (24). At least a portion of the sensing device (28) is arranged between the left light lens (23) and the right light lens (24) as seen in a vehicle front view. The left mounting portion (65) is arranged above and leftward of the sensing device (28), and is a portion for mounting the sensing device (28) to the vehicle body (2). The right mounting portion (66) is arranged above and rightward of the sensing device (28) and is for mounting the sensing device (28) to the vehicle body (2). At least a portion of the left mount extends from the sensing device (28) to above the left light lens (23). At least a portion of the right mount extends from the sensing device (28) to above the right light lens (24).

## Description

The present invention relates to a straddled vehicle.

Conventionally, some straddled vehicles are provided with a sensing device for detecting a situation in front of the vehicle. For example, in the straddled vehicle disclosed in WO 2019/224961 A, the front cover is provided with left and right headlights, and the detection unit is arranged between the left and right headlights. The detection unit includes a body portion and a plurality of mounting portions. The detection unit is fixed to the vehicle at the plurality of mounting portions. The plurality of mounting portions has three mounting portions (hereinafter referred to as first to third mounting portions). The first mounting portion and the second mounting portion extend directly downward from the body portion. The third mounting portion extends directly upward from the body portion. The entirety of the first to third mounting portions are arranged between the left and right headlights.

In the straddled vehicle described above, the distance between the first mounting portion and the second mounting portion is small. Therefore, the support rigidity of the detection unit is low. However, if the distance between the left and right headlights is increased in order to widen the distance between the first mounting portion and the second mounting portion, the size of the headlights will increase. It is an object of the present invention to provide a straddled vehicle in which left and right lights and a sensing device are arranged compactly and the support rigidity of the sensing device is improved. According to the present invention said object is solved by straddled vehicle having the features of independent claim 1. Alternatively, said object is solved by straddled vehicle having the features of independent claim 16. Preferred embodiments are laid down in the dependent claims.

A straddled vehicle according to one aspect includes a vehicle body, a left light, a right light, a sensing device, a left mounting portion, and a right mounting portion. The left light includes a left light lens. The right light includes a right light lens. At least a portion of the sensing device is arranged between the left light lens and the right light lens as seen in the vehicle front view. The sensing device detects a situation in front of the vehicle body. The left mounting portion is arranged above and leftward of the sensing device, and is a portion for mounting the sensing device to the vehicle body. The right mounting portion is arranged above and rightward of the sensing device and is a portion for mounting the sensing device to the vehicle body. At least a portion of the left mounting portion extends from the sensing device to above the left light lens. At least a portion of the right mounting portion extends from the sensing device to above the right light lens.

In the straddled vehicle according to the present aspect, the left mounting portion extends from the sensing device to above the left light lens, and the right mounting portion extends from the sensing device to above the right light lens. Therefore, it is possible to widen the distance between the left and right mounting portions while preventing the distance between the left and right light lenses from being enlarged. As a result, the right and left lights and the sensing device can be arranged compactly, and the support rigidity of the sensing device can be improved.

The left mounting portion may extend linearly from the sensing device to above the left light lens. In this case, the support rigidity of the left mounting portion is improved.

The right mounting portion may extend linearly from the sensing device to above the right light lens. In this case, the support rigidity of the right mounting portion is improved.

The distance between the left light lens and the right light lens may narrow downward. The straddled vehicle may further include a lower mounting portion. The lower mounting portion may be a portion for mounting the sensing device to the vehicle body, and may extend downward from the sensing device. In this case, the support rigidity is improved by arranging the left and right mounting portions in the wider upper portion of the space between the left and right light lenses. By arranging the lower mounting portion in the narrower lower portion of the space between the left and right light lenses, the lower mounting portion and the left and right light lenses are arranged in a compact manner.

The vehicle body may include a front cover. The left light lens may include a left transmissive portion and a left shading portion. The left transmissive portion may be arranged to transmit light and be exposed to the outside from the front cover. The left shading portion overlaps the front cover as seen in the vehicle front view, and may be subjected to light shielding processing. The right light lens may include a right transmissive portion and a right shading portion. The right transmissive portion may be arranged to transmit light and be exposed to the outside from the front cover. The right shading portion overlaps the front cover as seen in the vehicle front view, and may be subjected to light shielding processing. In this case, the left and right shading portions prevent the light from leaking toward the sensing device.

At least a portion of the sensing device may be located at the same height as the left transmissive portion and the right transmissive portion. In this case, the left and right lights and the sensing device can be arranged compactly in the vertical direction.

The straddled vehicle may further include a left rib arranged between the sensing device and the left light lens. In this case, the left rib prevents light from leaking toward the sensing device.

The straddled vehicle may further include a right rib arranged between the sensing device and the right light lens. In this case, the right rib prevents light from leaking toward the sensing device.

The inner side edge of the left light lens may include a first left edge and a second left edge. The second left edge may be arranged below the first left edge. The inner side edge of the right light lens may include a first right edge and a second right edge. The second right edge may be arranged below the first right edge. The distance between the first left edge and the first right edge may be greater than the distance between the second left edge and the second right edge. The sensing device may be arranged between the first left edge and the first right edge. In this case, since the inner side edges of the right and left light lenses are shaped so as to avoid the sensing device, the left and right light lenses and the sensing device are arranged compactly.

At least a portion of the left mounting portion may be arranged leftward of the first left edge. At least a portion of the right mounting portion may be arranged rightward of the first right edge. In this case, since the distance between the left and right mounting portions is large, the support rigidity is improved.

The distance between the second left edge and the second right edge may be smaller than the width of the sensing device in the left-right direction. In this case, the left and right light lenses are arranged compactly.

The straddled vehicle may further include a housing. The left light lens and the right light lens may be attached to the housing. The left mounting portion and the right mounting portion may be attached to the housing. In this case, assembly of the sensing device to the vehicle body is facilitated.

The sensing device may have a waterproof structure. In this case, the waterproof structure increases the size of the sensing device, but the feature of the present teaching enables compact arrangement between the left and right light lenses and the sensing device. The sensing device may include a left corner and a right corner. The left mounting portion may extend from the left corner to above the left light lens. The right mounting portion may extend from the right corner to above the right light lens. In this case, the distance between the left and right mounting portions is increased. This improves the support rigidity. The distance between the closest portions of the left light lens and the right light lens may be less than the width of the sensing device in the left-right direction. In this case, the left light lens and the right light lens are arranged compactly.

A straddled vehicle according to another aspect includes a vehicle body, a left light, a right light, a sensing device, a left mounting portion, and a right mounting portion. The left light includes a left light lens. The right light includes a right light lens. At least a portion of the sensing device is arranged between the left light lens and the right light lens as seen in the vehicle front view. The sensing device detects a situation in front of the vehicle body. The left mounting portion is arranged below and leftward of the sensing device, and is a portion for mounting the sensing device to the vehicle body. The right mounting portion is arranged below and rightward of the sensing device, and is a portion for mounting the sensing device to the vehicle body. At least a portion of the left mount extends from the sensing device to below the left light lens. At least a portion of the right mount extends from the sensing device to below the right light lens.

In the straddled vehicle according to the present aspect, the left mounting portion extends from the sensing device to below the left light lens, and the right mounting portion extends from the sensing device to below the right light lens. Therefore, it is possible to widen the distance between the left and right mounting portions while preventing the distance between the left and right light lenses from being enlarged. As a result, the right and left lights and the sensing device can be arranged compactly, and the support rigidity of the sensing device can be improved.

The distance between the left light lens and the right light lens may narrow upward. The straddled vehicle may further include an upper mounting portion. The upper mounting portion is a portion for mounting the sensing device to the vehicle body, and may extend upward from the sensing device. In this case, the support rigidity is improved by arranging the left and right mounting portions in the wider lower portion of the space between the left light lens and the right light lens. By arranging the upper mounting portion in the narrower upper portion of the space between the left light lens and the right light lens, the upper mounting portion and the left and right light lenses are arranged in a compact manner.

The inner side edge of the left light lens may include a first left edge and a second left edge. The second left edge may be arranged below the first left edge. The inner side edge of the right light lens may include a first right edge and a second right edge. The second right edge may be arranged below the first right edge. The distance between the second left edge and the second right edge may be greater than the distance between the first left edge and the first right edge. The sensing device may be arranged between the second left edge and the second right edge. In this case, since the inner side edges of the right and left light lenses are shaped so as to avoid the sensing device, the left and right light lenses and the sensing device are arranged compactly.

According to the present invention, in a straddled vehicle, the left and right lights and the sensing device are arranged compactly, and the support rigidity of the sensing device is improved.

### BRIEF DESCRIPTION OF THE DRAWINGS

FIG. 1 is a side view of a straddled vehicle according to an embodiment.
FIG. 2 is a front view of the front cover.
FIG. 3 is a front view of left and right lights and a sensing device.
FIG. 4 is a front view of the left and right lights.
FIG. 5 is a rear view of a left light lens and a right light lens.
FIG. 6 is a front view of the lights with the left and right light lenses removed.
FIG. 7 is a perspective view of the sensing device.
FIG. 8 is an enlarged front view of a front cover.
FIG. 9 is a cross-sectional view taken along line VIII-VIII in FIG. 8.
FIG. 10 is a front view of a front cover of a straddled vehicle according to a modification.

### DETAILED DESCRIPTION

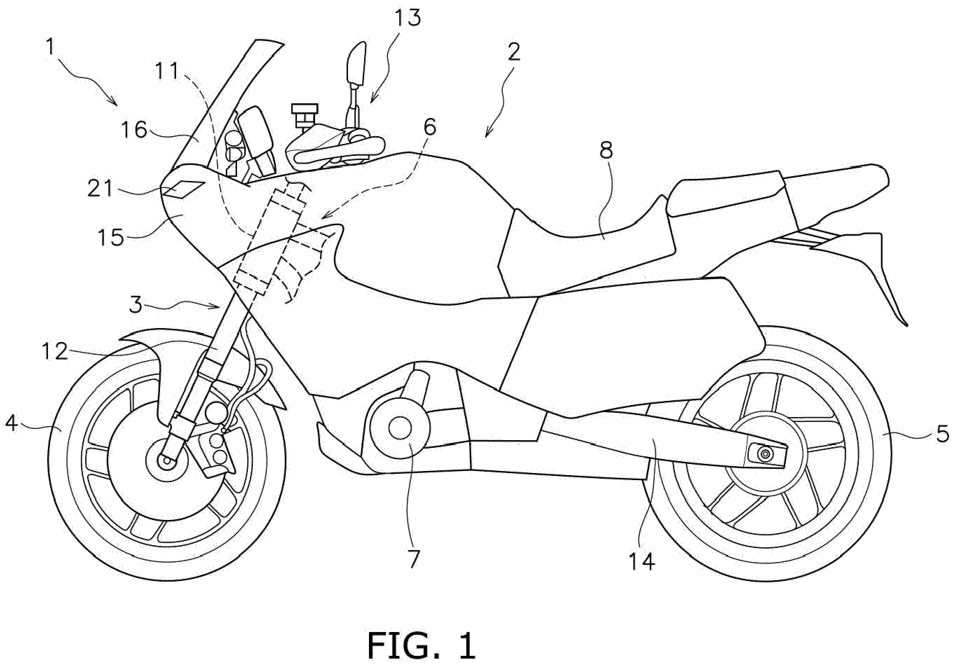

A straddled vehicle according to an embodiment will be described below with reference to the drawings. FIG. 1 is a side view of a straddled vehicle 1 according to an embodiment. The straddled vehicle 1 according to the embodiment is a motorcycle. As shown in FIG. 1, the straddled vehicle 1 includes a vehicle body 2, a steering device 3, a front wheel 4, and a rear wheel 5. In the following description, the front, rear, left, and right directions refer to the front, rear, up, down, left, and right directions as seen from a rider sitting on the seat 8. Accordingly, it is referred to a front-rear-direction of the vehicle, an up-down-direction of the vehicle and a left-right-direction of the vehicle. The up-down-direction of the vehicle corresponds with the vertical direction.

The vehicle body 2 includes a vehicle body frame 6, a power unit 7, and a seat 8. The vehicle body frame 6 includes a head pipe 11. The power unit 7 includes, for example, an internal combustion engine. Alternatively, the power unit 7 may include an electric motor.

The steering device 3 is supported by the head pipe 11 so as to be rotatable to the left and right. The steering device 3 includes a front fork 12 and a handle member 13. The front fork 12 rotatably supports the front wheel 4. The handle member 13 is connected to the front fork 12. The rear wheel 5 is rotatably supported by the body frame 6 via a swing arm 14.

The vehicle body 2 includes a front cover 15. The front cover 15 is arranged in front of the head pipe 11. The front cover 15 covers the head pipe 11 from the front. The vehicle body 2 includes a windscreen 16. The windscreen 16 is arranged above the front cover 15. The windscreen 16 is attached to the front cover 15.

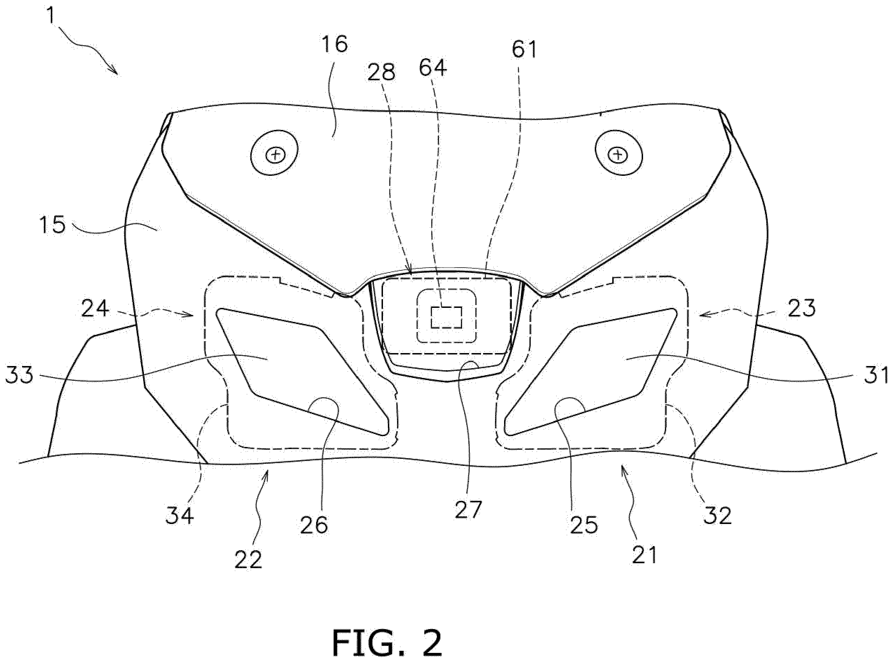

FIG. 2 is a front view of the front cover 15. As shown in FIG. 2, the straddled vehicle 1 includes a left light 21 and a right light 22. The left light 21 and the right light 22 are, for example, position lights. Alternatively, the left light 21 and right light 22 may be headlights.

The left light 21 includes a left light lens 23. The left light lens 23 is made of a transparent material. The right light 22 includes a right light lens 24. The right light lens 24 is made of a transparent material. For example, the left light lens 23 and the right light lens 24 are made of transparent resin. The left light lens 23 and the right light lens 24 are arranged on the front cover 15.

The front cover 15 includes a left opening 25, a right opening 26, and a central opening 27. The left opening 25 and the right opening 26 are arranged apart from each other on the left and right. A portion of the left light lens 23 is exposed to the outside through the left opening 25. A portion of the right light lens 24 is exposed to the outside through the right opening 26. The central opening 27 is arranged between the left opening 25 and the right opening 26. The central opening 27 is arranged below the windscreen 16.

The straddled vehicle 1 includes a sensing device 28. The sensing device 28 detects a situation in front of the vehicle body 2. The sensing device 28 is, for example, a camera, and acquires data indicating the front of the vehicle body 2 by photographing the front of the vehicle body 2. The data includes, for example, the amount of light and color in front of the vehicle body 2. The sensing device 28 is arranged behind the front cover 15. The sensing device 28 is arranged behind the central opening 27. The sensing device 28 overlaps the central opening 27 as seen in the vehicle front view. A cover may be arranged over the central opening 27 to protect the sensing device 28. Alternatively, the central opening 27 may be open without a cover.

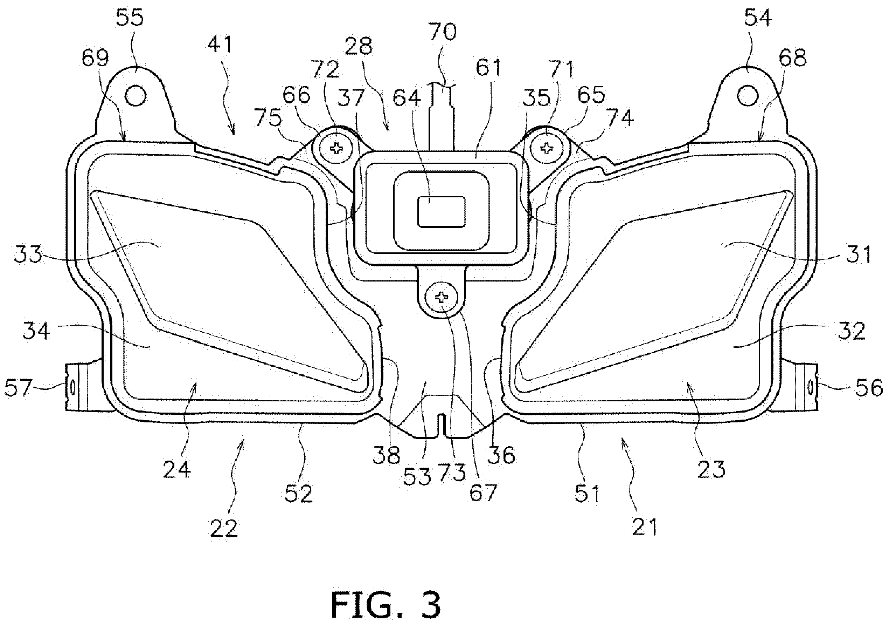

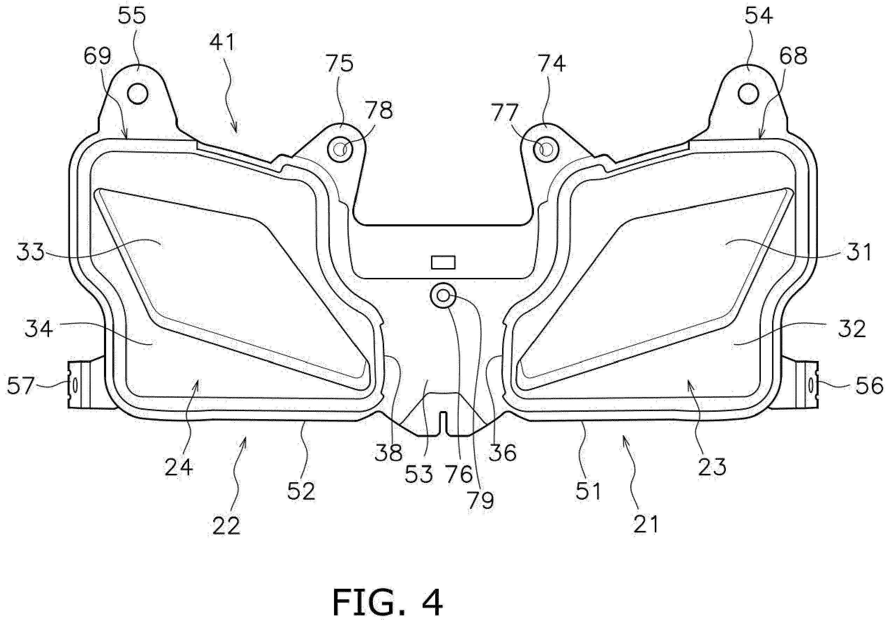

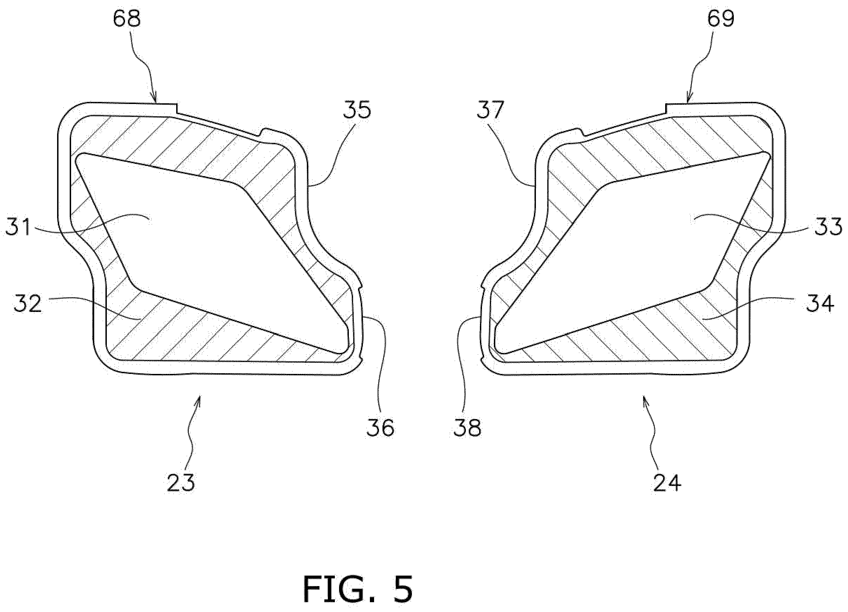

FIG. 3 is a front view of the left and right lights 21 and 22 and the sensing device 28. FIG. 4 is a front view of the left and right lights 21 and 22. FIG. 5 is a rear view of the left light lens 23 and the right light lens 24. As shown in FIGS. 3 to 5, the left light lens 23 and the right light lens 24 are arranged apart from each other in the left-right direction. The left light lens 23 and the right light lens 24 are separate bodies from each other. However, the left light lens 23 and the right light lens 24 may be integrally formed.

The left light lens 23 includes a left transmissive portion 31 and a left shading portion 32. The right light lens 24 includes a right transmissive portion 33 and a right shading portion 34. The left shading portion 32 and the right shading portion 34 do not transmit light. As indicated by hatching in FIG. 5, the left shading portion 32 and the right shading portion 34 are subjected to light-shielding processing. The light-shielding processing is, for example, coating with a paint that does not transmit light. The left shading portion 32 is arranged so as to surround the left transmissive portion 31. The right shading portion 34 is arranged so as to surround the right transmissive portion 33.

The left transmissive portion 31 and the right transmissive portion 33 are not subjected to light-shielding processing, and transmit light. As shown in FIG. 2, the left transmissive portion 31 is arranged in the left opening 25. The right transmissive portion 33 is arranged in the right opening 26. Thereby, the left transmissive portion 31 and the right transmissive portion 33 are arranged so as to be exposed to the outside from the front cover 15. The left shading portion 32 and the right shading portion 34 overlap the front cover 15 as seen in the vehicle front view.

The distance between the left light lens 23 and the right light lens 24 narrows downward. Specifically, the inner side edge of left light lens 23 includes a first left edge 35 and a second left edge 36. The second left edge 36 is arranged below the first left edge 35. The inner side edge of right light lens 24 includes a first right edge 37 and a second right edge 38. The second right edge 38 is arranged below the first right edge 37. The first left edge 35 and the first right edge 37 are arranged apart from each other in the left-right direction. The second left edge 36 and the second right edge 38 are arranged apart from each other in the left-right direction. The distance between the first left edge 35 and the first right edge 37 is greater than the distance between the second left edge 36 and the second right edge 38.

As shown in FIGS. 3 and 4, the left and right lights 21 and 22 include a housing 41. The housing 41 is arranged behind the left light lens 23 and the right light lens 24. The left light lens 23 and the right light lens 24 are attached to the housing 41. In the present embodiment, the left light lens 23 and the right light lens 24 are attached to the common housing 41. However, the left light lens 23 and the right light lens 24 may be attached to separate housings respectively.

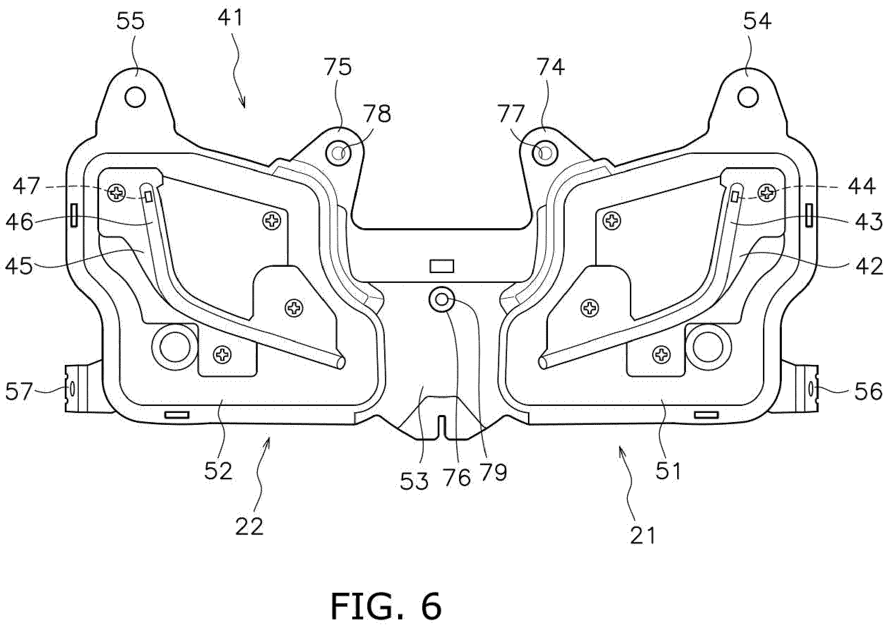

FIG. 6 is a front view of the housing 41. As shown in FIG. 6, the left light 21 includes a first substrate 42 and a first light guide 43. The first substrate 42 and the first light guide 43 are attached to the housing 41. The first substrate 42 includes a first light source 44. The first light source 44 is, for example, an LED. The first light guide 43 emits light by the light from the first light source 44. The first light guide 43 is arranged behind the left transmissive portion 31 described above. The left transmissive portion 31 overlaps the first light guide 43 from the front.

The right light 22 includes a second substrate 45 and a second light guide 46. The second substrate 45 and the second light guide 46 are attached to the housing 41. The second substrate 45 includes a second light source 47. The second light source 47 is, for example, an LED. The second light guide 46 emits light by the light from the second light source 47. The second light guide 46 is arranged behind the right transmissive portion 33 described above. The right transmissive portion 33 overlaps the second light guide 46 from the front.

The housing 41 includes a left storage portion 51, a right storage portion 52, and a central portion 53. The first substrate 42 and the first light guide 43 are arranged in the left storage portion 51. The left light lens 23 covers the left storage portion 51 from the front. The second substrate 45 and the second light guide 46 are arranged in the right storage portion 52. The right light lens 24 covers the right storage portion 52 from the front. The central portion 53 is arranged between the left storage portion 51 and the right storage portion 52. The central portion 53 is connected to the left storage portion 51 and the right storage portion 52.

The housing 41 includes a plurality of housing fixing portions 54 to 57. The housing 41 is fixed to the front cover 15 by screws, for example, at the plurality of housing fixing portions 54 to 57. The plurality of housing fixing portions 54 to 57 includes a first housing fixing portion 54, a second housing fixing portion 55, a third housing fixing portion 56, and a fourth housing fixing portion 57. The first housing fixing portion 54 protrudes upward from the left storage portion 51. The second housing fixing portion 55 protrudes upward from the right storage portion 52. The third housing fixing portion 56 protrudes leftward from the left storage portion 51. The fourth housing fixing portion 57 protrudes rightward from the right storage portion 52.

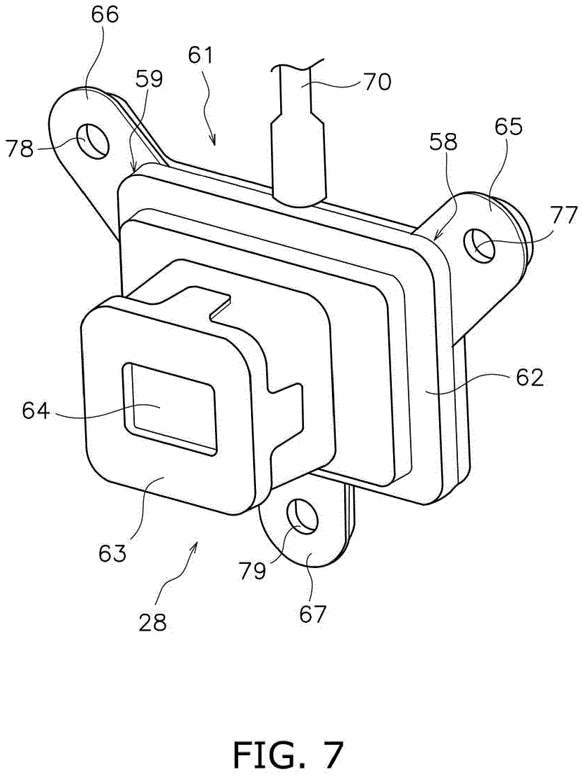

FIG. 7 is a perspective view of the sensing device 28. As shown in FIGS. 3 and 7, the sensing device 28 includes a body case 61. The body case 61 accommodates electronic components such as an imaging sensor and a processor (not shown). The body case 61 has a waterproof structure. The body case 61 includes, for example, a sealing material for sealing a gap in the body case 61.

The body case 61 includes a base portion 62 and a case portion 63. The base portion 62 has a substantially rectangular shape as seen from the front view. An electric cable 70 is connected to the upper surface of the base portion 62. The case portion 63 protrudes forward from the base portion 62. A protective cover 64 is attached to the front surface of the case portion 63. The protective cover 64 allows light to pass therethrough.

A left mounting portion 65, a right mounting portion 66, and a lower mounting portion 67 are connected to the body case 61. Specifically, the left mounting portion 65, the right mounting portion 66, and the lower mounting portion 67 are connected to the base portion 62. The left mounting portion 65, the right mounting portion 66, and the lower mounting portion 67 are portions for mounting the sensing device 28 to the vehicle body 2. The left mounting portion 65, the right mounting portion 66, and the lower mounting portion 67 are attached to the housing 41. As shown in FIG. 3, the left mounting portion 65, the right mounting portion 66, and the lower mounting portion 67 are secured to the housing 41 by screws 71 to 73, respectively. The left mounting portion 65 extends obliquely upward and leftward from the sensing device 28. The right mounting portion 66 extends obliquely upward and rightward from the sensing device 28. The sensing device 28 includes a left corner 58 and a right corner 59. The left corner 58 is the upper left portion of the sensing device 28. The right corner 59 is the upper right portion of the sensing device 28. The left mounting portion 65 extends from the left corner 58. The right mounting portion 66 extends from the right corner 59.

The lower mounting portion 67 extends downward from the bottom surface of the sensing device 28. The lower mounting portion 67 is arranged between the left mounting portion 65 and the right mounting portion 66 in the left-right direction. The lower mounting portion 67 is arranged at the center of the sensing device 28 in the left-right direction.

As shown in FIG. 3, the sensing device 28 is arranged between left light lens 23 and the right light lens 24. The sensing device 28 is arranged in front of the housing 41. The distance between the first left edge 35 and the first right edge 37 is greater than the width of the sensing device 28 in the left-right direction. The distance between the first left edge 35 and the first right edge 37 is greater than the width of the base portion 62 in the left-right direction. The distance between the second left edge 36 and the second right edge 38 is smaller than the width of the sensing device 28 in the left-right direction. The distance between the second left edge 36 and the second right edge 38 is smaller than the width of the base portion 62 in the left-right direction. The distance between the closest portions of left light lens 23 and right light lens 24 is smaller than the width of sensing device 28 in the left-right direction.

The sensing device 28 is arranged between the first left edge 35 and the first right edge 37. At least a portion of sensing device 28 is located below the upper edge 68 of the left light lens 23 and the upper edge 69 of the right light lens 24. At least a portion of the sensing device 28 is arranged at the same height as the left transmissive portion 31 and the right transmissive portion 33. Specifically, a portion of the case portion 63 is arranged at the same height as the left transmissive portion 31 and the right transmissive portion 33. A portion of the protective cover 64 is arranged at the same height as the left transmissive portion 31 and the right transmissive portion 33. The entire sensing device 28 is arranged above the second left edge 36 and the second right edge 38.

The left mounting portion 65 is arranged above and leftward of the sensing device 28. The left mounting portion 65 extends from the sensing device 28 to above the left light lens 23. That is, the left mounting portion 65 extends from the sensing device 28 to above the upper edge 68 of the left light lens 23. At least a portion of the left mounting portion 65 is arranged leftward of the first left edge 35. The left mounting portion 65 extends to a position leftward of the first left edge 35. The left mounting portion 65 extends linearly from the sensing device 28. A portion of the left mounting portion 65 is arranged below the upper edge 68 of the left light lens 23.

The right mounting portion 66 is arranged above and rightward of the sensing device 28. The right mounting portion 66 extends from the sensing device 28 to above the right light lens 24. That is, the right mounting portion 66 extends from the sensing device 28 to above the upper edge 69 of the right light lens 24. At least a portion of the right mounting portion 66 is arranged rightward of the first right edge 37. The right mounting portion 66 extends to a position rightward of the first right edge 37. The right mounting portion 66 extends linearly from the sensing device 28. A portion of the right mounting portion 66 is located below the upper edge 69 of the right light lens 24. The entire lower mounting portion 67 is arranged between the left light lens 23 and the right light lens 24.

As shown in FIG. 4, the housing 41 includes a first fixing portion 74, a second fixing portion 75, and a third fixing portion 76. The first fixing portion 74 protrudes upward from the left storage portion 51, and the second fixing portion 75 protrudes upward from the right storage portion 52. The third fixing portion 76 is provided in the central portion 53. The first fixing portion 74 includes a first hole 77 through which a screw 71 for fixing the left mounting portion 65 to the first fixing portion 74 is passed. The second fixing portion 75 includes a second hole 78 through which a screw 72 for fixing the right mounting portion 66 to the second fixing portion 75 is passed. The third fixing portion 76 includes a third hole 79 through which a screw 73 for fixing the lower mounting portion 67 to the third fixing portion 76 is passed.

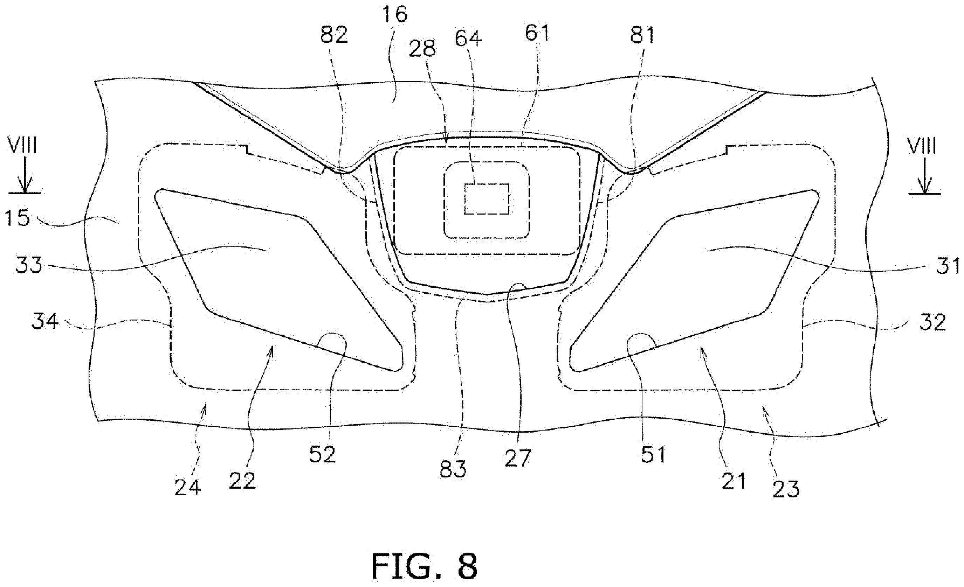

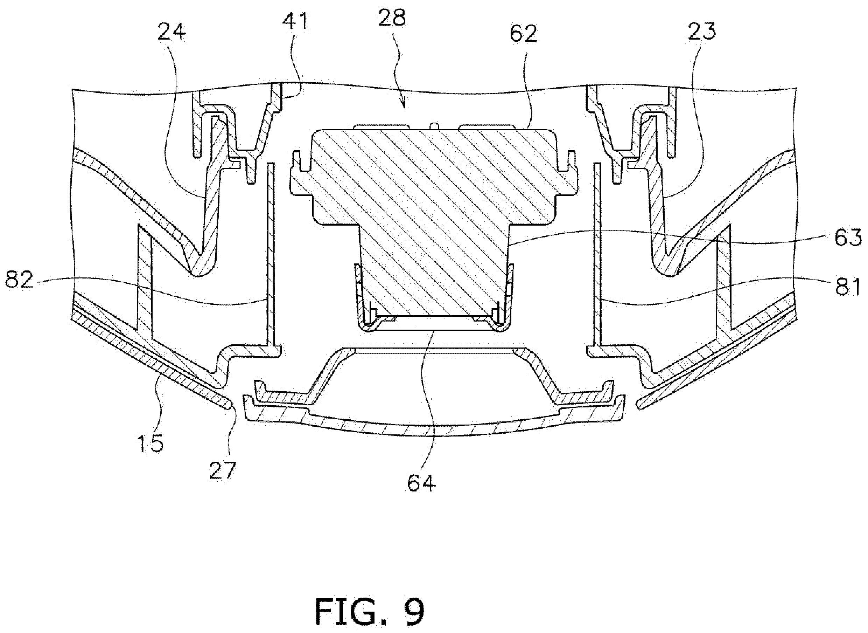

FIG. 8 is an enlarged front view of the front cover 15. FIG. 9 is a cross-sectional view taken along line VIII-VIII in FIG. 8. As shown in FIGS. 8 and 9, the front cover 15 includes a left rib 81, a right rib 82, and a lower rib 83. The left rib 81, the right rib 82, and the lower rib 83 protrude rearward from the front cover 15. The left rib 81, the right rib 82, and the lower rib 83 extend from the edge of central opening 27 to the housing 41. The left rib 81 is arranged between the sensing device 28 and the left light lens 23. The left rib 81 extends rearward beyond the protective cover 64. The right rib 82 is arranged between the sensing device 28 and the right light lens 24. The right rib 82 extends rearward beyond the protective cover 64. The lower rib 83 is arranged below the sensing device 28. The left rib 81, the right rib 82, and the lower rib 83 are arranged so that light from the left and right lights 21 and 22 does not leak into the space between the sensing device 28 and the central opening 27.

In the straddled vehicle 1 according to the present embodiment described above, the left mounting portion 65 extends from the sensing device 28 to above the left light lens 23, and the right mounting portion 66 extends from the sensing device 28 to above the right light lens 24. Therefore, it is possible to increase the distance between the left and right mounting portions 65 and 66 while suppressing the distance between the left and right lights 21 and 22 from being enlarged. Thereby, the left and right lights 21 and 22 and the sensing device 28 can be arranged compactly, and the support rigidity of the sensing device 28 can be improved.

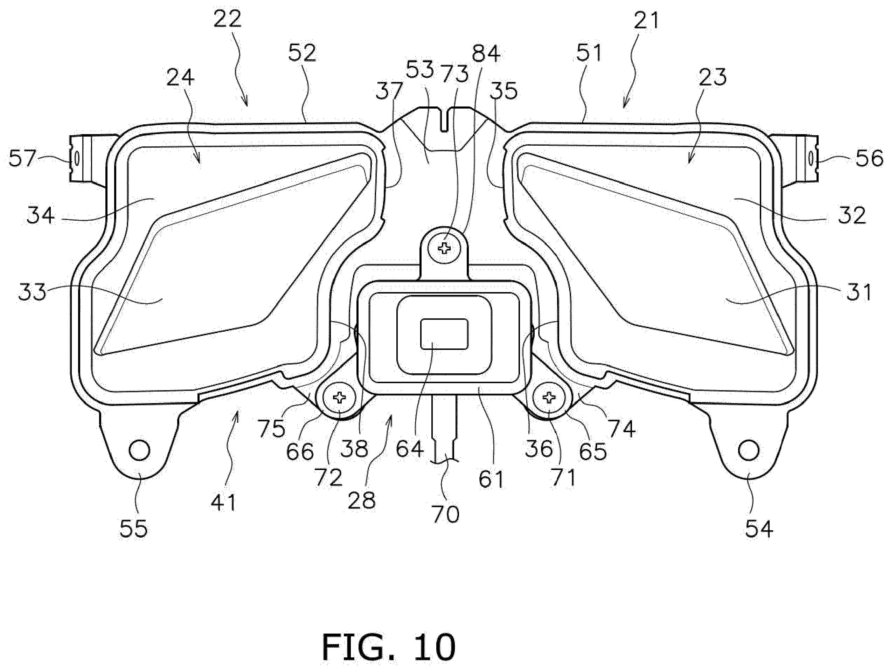

In consideration of a further embodiment, the housing 41 is not limited to being integrated, and may be separate. The shapes of the left light 21 and the right light 22 are not limited to those of the above embodiment, and may be changed. The shapes of the sensing device 28, the left mounting portion 65, and the right mounting portion 66 are not limited to those of the above embodiment, and may be changed. For example, FIG. 10 is a front view of a front cover 15 of a straddled vehicle 1 according to a modification. As shown in FIG. 10, the distance between the left light lens 23 and the right light lens 24 may narrow upward. That is, the distance between the second left edge 36 and the second right edge 38 may be greater than the distance between the first left edge 35 and the first right edge 37.

In the straddled vehicle 1 according to the modification, the left mounting portion 65 and the right mounting portion 66 may be arranged vertically symmetrically with respect to the above embodiment. That is, the left mounting portion 65 may be arranged below and leftward of the sensing device 28. For example, the left mounting portion 65 may extend from the sensing device 28 to below the left light lens 23. The right mounting portion 66 may be arranged below and rightward of the sensing device 28. The right mounting portion 66 may extend from the sensing device 28 to below the right light lens 24.

The straddled vehicle 1 according to the modification may include an upper mounting portion 84 instead of the lower mounting portion 67 of the above embodiment. The upper mounting portion 84 may be arranged vertically symmetrically with respect to the lower mounting portion 67 of the above embodiment. For example, the upper mounting portion 84 may extend upwardly from the sensing device 28. The sensing device 28 is not limited to a camera, and may be another device such as a millimeter wave radar or LIDAR.

The arrangement of the sensing device 28 is not limited to that of the above embodiment, and may be changed. For example, a portion of the sensing device 28 may be arranged behind the housing 41. In the above-described embodiment, the central opening 27 has a notch shape that partially opens, but the shape of the central opening 27 is not limited to that of the above-described embodiment, and may be changed. For example, the central opening 27 may have a shape that is closed all around.

### REFERENCE SIGNS LIST

2: Vehicle body, 15: Front cover, 21: Left light, 22: Right light, 28: Detecting device, 31: Left transmissive portion, 32: Left shading portion, 33: Right transmissive portion, 34: Right shading portion, 35: First left edge, 36: Second left edge, 37: First right edge, 38: Second right edge, 41: Housing, 65: Left mounting portion, 66: Right mounting portion, 67: Lower mounting portion, 81: Left rib, 82: Right rib

## Claims

1. A straddled vehicle (1) comprising:
a vehicle body (2);
a left light (21) and a right light (22) with regard to a left-right-direction of the vehicle; the left light (21) including a left light lens (23);
the right light (22) including a right light lens (24);
a sensing device (28) at least partially arranged between the left light lens (23) and the right light lens (24) as seen in a vehicle front view, the sensing device (28) being configured to detect a situation in front of the vehicle body (2);
a left mounting portion (65) disposed above and leftward of the sensing device (28) with regard to an up-down-direction and the left-right-direction of the vehicle for mounting the sensing device (28) to the vehicle body (2); and
a right mounting portion (66) disposed above and rightward of the sensing device (28) with regard to the up-down-direction and the left-right-direction of the vehicle for mounting the sensing device (28) to the vehicle body (2), wherein
at least a portion of the left mounting portion (65) extends from the sensing device (28) to above the left light lens (23) with regard to the up-down-direction of the vehicle, and
at least a portion of the right mounting portion (66) extends from the sensing device (28) to above the right light lens (24) with regard to the up-down-direction of the vehicle.

2. The straddled vehicle (1) according to claim 1, wherein the left mounting portion (65) extends linearly from the sensing device (28) to above the left light lens (23) with regard to the up-down-direction of the vehicle.

3. The straddled vehicle (1) according to claim 1 or 2, wherein the right mounting portion (66) linearly extends from the sensing device (28) to above the right light lens (24) with regard to the up-down-direction of the vehicle.

4. The straddled vehicle (1) according to any one of claims 1 to 3, wherein a distance between the left light lens (23) and the right light lens (24) narrows downward with regard to the up-down-direction of the vehicle, and
the straddled vehicle (1) further comprises a lower mounting portion (67) extending downward from the sensing device (28) with regard to the up-down-direction of the vehicle for mounting the sensing device (28) to the vehicle body (2).

5. The straddled vehicle (1) according to any one of claims 1 to 4, wherein the vehicle body (2) includes a front cover (15),
the left light lens (23) includes
a left transmissive portion (31) arranged to be exposed to an outside from the front cover (15) and configured for transmitting light, and
a left shading portion (32) that overlaps with the front cover (15) as seen in the vehicle front view and that is subjected to light-shielding processing,
the right light lens (24) includes
a right transmissive portion (33) arranged to be exposed to the outside from the front cover (15) and configured for transmitting light, and
a right shading portion (34) that overlaps with the front cover (15) as seen in the vehicle front view and is subjected to light-shielding processing.

6. The straddled vehicle (1) according to claim 5, wherein at least a portion of the sensing device (28) is arranged at a same height as the left transmissive portion (31) and the right transmissive portion (33) with regard to the up-down-direction of the vehicle.

7. The straddled vehicle (1) according to any one of claims 1 to 6, further comprising a left rib (81) arranged between the sensing device (28) and the left light lens (23).

8. The straddled vehicle (1) according to any one of claims 1 to 7, further comprising a right rib (82) arranged between the sensing device (28) and the right light lens (24).

9. The straddled vehicle (1) according to any one of claims 1 to 8, wherein an inner side edge of the left light lens (23) with regard to the left-right-direction of the vehicle includes
a first left edge (35), and
a second left edge (36) arranged below the first left edge (35) with regard to the up-down-direction of the vehicle,
an inner side edge of the right light lens (24) with regard to the left-right-direction of the vehicle includes
a first right edge (37), and
a second right edge (38) arranged below the first right edge (37) with regard to the up-down-direction of the vehicle,
a distance between the first left edge (35) and the first right edge (37) is greater than a distance between the second left edge (36) and the second right edge (38), and
the sensing device (28) is arranged between the first left edge (35) and the first right edge (37).

10. The straddled vehicle (1) according to any one of claims 1 to 8, wherein an inner side edge of the left light lens (23) with regard to the left-right-direction of the vehicle includes a first left edge (35),
an inner side edge of the right light lens (24) with regard to the left-right-direction of the vehicle includes a first right edge (37),
at least a portion of the left mounting portion (65) is arranged leftward of the first left edge (35) with regard to the left-right-direction of the vehicle, and
at least a portion of the right mounting portion (66) is arranged rightward of the first right edge (37) with regard to the left-right-direction of the vehicle.

11. The straddled vehicle (1) according to claim 9, wherein the distance between the second left edge (36) and the second right edge (38) is smaller than a width of the sensing device (28) with regard to the left-right-direction of the vehicle.

12. The straddled vehicle (1) according to any one of claims 1 to 11, further comprising a housing (41) to which the left light lens (23) and the right light lens (24) are attached, wherein
the left mounting portion (65) and the right mounting portion (66) are attached to the housing (41).

13. The straddled vehicle (1) according to any one of claims 1 to 12, wherein the sensing device (28) has a waterproof structure.

14. The straddled vehicle (1) according to any one of claims 1 to 13, wherein the sensing device (28) includes a left corner (58) and a right corner (59) with regard to the left-right-direction of the vehicle,
the left mounting portion (65) extends from the left corner (58) to above the left light lens (23) with regard to the up-down-direction of the vehicle, and
the right mounting portion (66) extends from the right corner (59) to above the right light lens (24) with regard to the up-down-direction of the vehicle.

15. The straddled vehicle (1) according to any one of claims 1 to 14, wherein a distance between closest portions of the left light lens (23) and the right light lens (24) is smaller than a width of the sensing device (28) with regard to the left-right-direction of the vehicle.

16. A straddled vehicle (1) comprising:
a vehicle body (2);
a left light (21) and a right light (22) with regard to a left-right-direction of the vehicle; the left light (21) including a left light lens (23);
the right light (22) including a right light lens (24);
a sensing device (28) at least partially arranged between the left light lens (23) and the right light lens (24) as seen in a vehicle front view, the sensing device (28) being configured to detect a situation in front of the vehicle body (2);
a left mounting portion (65) disposed below and leftward of the sensing device (28) with regard to an up-down-direction and the left-right-direction of the vehicle for mounting the sensing device (28) to the vehicle body (2); and
a right mounting portion (66) disposed below and rightward of the sensing device (28) with regard to an up-down-direction and the left-right-direction of the vehicle for mounting the sensing device (28) to the vehicle body (2), wherein
at least a portion of the left mounting portion (65) extends from the sensing device (28) to below the left light lens (23) with regard to the up-down-direction of the vehicle, and
at least a portion of the right mounting portion (66) extends from the sensing device (28) to below the right light lens (24) with regard to the up-down-direction of the vehicle.

17. The straddled vehicle (1) according to claim 16, wherein a distance between the left light lens (23) and the right light lens (24) narrows upward with regard to the up-down-direction of the vehicle,
the straddled vehicle (1) further comprises an upper mounting portion (84) extending upward from the sensing device (28) with regard to the up-down-direction of the vehicle for mounting the sensing device (28) to the vehicle body (2).

18. The straddled vehicle (1) according to claim 16 or 17, wherein an inner side edge of the left light lens (23) with regard to the left-right-direction of the vehicle includes
a first left edge (35), and
a second left edge (36) arranged below the first left edge (35) with regard to the up-down-direction of the vehicle,
an inner side edge of the right light lens (24) with regard to the left-right-direction of the vehicle includes
a first right edge (37), and
a second right edge (38) arranged below the first right edge (37) with regard to the up-down-direction of the vehicle,
a distance between the second left edge (36) and the second right edge (38) is greater than a distance between the first left edge (35) and the first right edge (37), and
the sensing device (28) is arranged between the second left edge (36) and the second right edge (38).
